# EUROPÄISCHE PATENTSCHRIFT

(11) **EP 1 686 281 B1**
(45) Veröffentlichungstag und Bekanntmachung des Hinweises auf die Patenterteilung: **02.09.2009**
(21) Anmeldenummer: 05027590.8
(22) Anmeldetag: 16.12.2005
(51) Int. Cl.: F16D 65/38

(54) **Nachstellvorrichtung für eine Scheibenbremse**
Automatic slack adjuster for a disc brake
Régleur automatique de jeu pour un frein à disque

(30) Priorität: 26.01.2005 DE 102005003648
(43) Veröffentlichungstag der Anmeldung: 02.08.2006
(73) Patentinhaber: KNORR-BREMSE SYSTEME FÜR NUTZFAHRZEUGE GMBH, 80809 München (DE)
(72) Erfinder: Baumgartner, Johann, 85368 Moosburg (DE)
(74) Vertreter: Mattusch, Gundula

(56) Entgegenhaltungen:
- WO-A-98/06608
- DE-A1- 10 201 221
- DE-A1- 10 243 596
- DE-A1- 19 731 696
- US-B1- 6 257 377

## Beschreibung

Die vorliegende Erfindung betrifft eine Nachstellvorrichtung für eine Scheibenbremse nach dem Oberbegriff des Anspruches 1.

Aus der DE 197 56 519 ist ein Bremszylinder für druckluftbetätigte Bremsen bekannt, bei dem über einen Hebel ein Zuspannen von Bremsbacken in Richtung der Bremsscheibe erfolgt. In dem Bremszylinder ist ein Steuermodul integriert, das unter anderem dazu eingesetzt werden kann, eine Nachstellung der ansonsten pneumatisch betätigten Bremsen vorzunehmen. Der Nachstellmotor kann dann das Lüftspiel der Bremse entsprechend einstellen.

Aus der DE 197 31 696 ist eine Verschleißnachstellvorrichtung für Scheibenbremsen bekannt, die einen Elektroantrieb aufweist, welcher durch eine Drehbetätigung wenigstens eine der Stellspindeln nachstellt. Durch den Elektroantrieb kann das Lüftspiel zwischen den Bremsbelägen und der Bremsscheibe eingestellt werden.

Dieses Dokument zeigt weiter die Merkmale des Oberbegriffs des Anspruches 1.

Bei solchen Verschleißnachstellvorrichtungen wurde im Rahmen der Erfindung die Erkenntnis gewonnen, dass bei den Verstellspindeln auch bei selbsthemmender Auslegung der Gewinde bei Bremsvorgängen eine geringfügige Rückwärtsdrehbewegung auftreten kann, die etwa 0,001 mm pro Bremsbetätigung betragen kann. Der Betrag der Rückstellbewegung ist dabei in etwa proportional zum Bremsdruck bzw. der Zuspannkraft an den Spindeln. Diese Rückwärtsdrehbewegung wird dadurch hervorgerufen, dass bei einer Bremsbetätigung durch die dann erfolgende Verschiebung der Bremsbeläge in Umfangsrichtung eine Querbewegung in den Gewindeflanken hervorgerufen wird. Durch diese Querbewegung verliert das Gewinde kurzzeitig die selbsthemmende Wirkung, sodass die unter axialer Last stehende Gewindespindel eine Rückwärtsdrehbewegung ausführt. Bei einer großen Anzahl von Bremsbetätigungen kann eine unzulässige Luftspielvergrößerung die Folge sein.

Um diesen Effekt zu vermeiden, könnten mechanische Verschleißnachstellsysteme verwendet werden. Diese sind allerdings in der Handhabung aufwendig. Zudem können elektrisch angetriebene Nachstellsysteme ein Lüftspiel sowohl in vergrößernder als auch in verkleinernder Richtung justieren, weshalb Freilaufgesperre nicht anwendbar sind. Der Einsatz ständig wirkender Reibkräfte an den Stellspindeln zur Vermeidung einer Rückstellbewegung wäre zwar möglich, allerdings muss diese dann bei sämtlichen Verstellvorgängen überwunden werden. Dies hätte eine erhebliche Erhöhung der Gesamt-Verstellkraft zur Folge mit entsprechenden Auswirkungen auf die Dimensionierung des elektrischen Antriebes.

Es ist daher Aufgabe der vorliegenden Erfindung eine Nachstellvorrichtung für eine Scheibenbremse zu schaffen, die unter Einsatz eines elektrischen Antriebes eine Rückstellbewegung beim Bremsvorgang verhindert.

Diese Aufgabe wird mit einer Nachstellvorrichtung mit den Merkmalen des Anspruches 1 gelöst.

Erfindungsgemäß ist die wenigstens eine Stellspindel mittels des elektrischen Antriebes gegen ein Rückstellen beim Bremsen fixiert, sodass es nicht zu einem Rückstellen der Stellspindeln und einem Vergrößern des Lüftspiels auch bei vielen Bremsvorgängen kommt. Dadurch braucht im Bereich der Stellspindeln keine mechanische Rückstellsperre vorgesehen werden, da der elektrische Antrieb entsprechende Haltekräfte bereitstellt.

Dazu erfolgt die Fixierung über am Antrieb wirkende Reib- oder Klemmkräfte, die bei Bewegung des Antriebes überwindbar oder aufhebbar sind. Denn die Haltekräfte sollen gerade im stromlosen Zustand vorhanden sein, da durch ständige Stromaufnahme erzeugte Haltekräfte einen erhöhten Energieverbrauch bewirken würden. Bei der Nachstellvorrichtung soll die Haltewirkung gerade bei fehlender Stromversorgung vorhanden sein, da im bestromten Zustand eine eingetretene Lüftspielvergrößerung durch die Nachstellvorrichtung automatisch korrigiert wird.

Ferner ist die Fixierung der Stellspindeln über Magnetkräfte zu erreichen. Hierbei kann der elektrische Antrieb so gestaltet sein, dass Polrastmomente auftreten, die ein Rückstellen der Stellspindeln verhindern. Dabei können die Magnetpole des Dauermagneten bei stromlos stillstehendem Motor genutzt werden, da diese sich zu den Polen des Weicheisenkerns des Elektromagneten so auszurichten versuchen, dass der dauermagnetische Kreis optimal geschlossen wird. Aus dieser stabilen Position lässt sich der Rotor nur mit einem gewissen Kraftaufwand weiterdrehen, bis er nach einem bestimmten Drehwinkel in die nächste Polraste fällt, wo er wieder eine stabile Lage einnimmt. Diese Polrastmomente können eingesetzt werden, um die notwendigen Haltekräfte für die Stellspindeln bereitzustellen.

Gemäß der Erfindung ist an dem elektrischen Antrieb ein axial federnder Rotor vorgesehen, bei dem durch eine Federkraft im stromlosen Zustand der Rotor gegen eine Reibscheibe zur Fixierung der Stellspindeln drückt. Dadurch kann die Reibkraft aufgehoben werden, wenn der Elektromagnet bestromt wird und er sich dadurch symmetrisch zu dem Dauermagneten Positioniert und nicht länger an der Reibscheibe anliegt. Die Federkraft auf den Rotor ist dabei so bemessen, dass die elektrisch magnetische Zugkraft die Federkraft noch überwinden kann und der Rotor axial bewegbar bleibt. Im stromlosen Zustand ist die axiale Federkraft jedoch so groß, dass die Reibkräfte entsprechenden Rückstellkräften durch die Stellspindeln entgegenwirkt.

Die Erfindung wird nachfolgend anhand mehrerer Ausführungsbeispiele mit Bezug auf die beigefügten Zeichnungen näher erläutert. Es zeigen:
- Figur 1: eine geschnittene Ansicht einer Scheibenbremse mit einer erfindungsgemäßen Nachstellvorrichtung;
- Figur 2: eine Seitenansicht eines elektrischen Antriebes der Nachstellvorrichtung der Figur 1;
- Figur 3: eine Seitenansicht eines modifizierten Rotors einer Nachstellvorrichtung der Figur 1;
- Figur 4: eine grafische Darstellung der magnetischen Flussdichte bei Polrastmomenten.

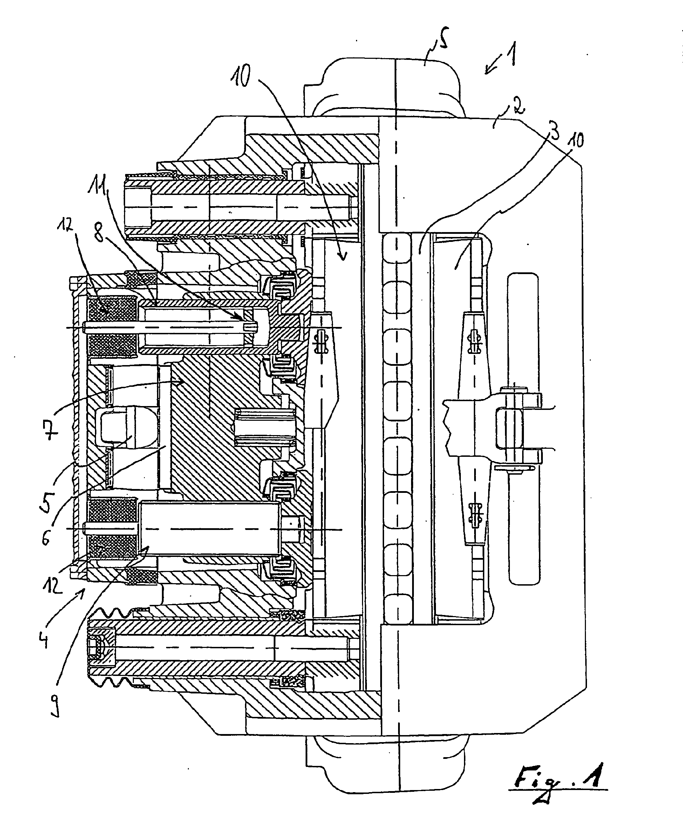

Eine in Figur 1 dargestellte Scheibenbremse 1 umfasst einen Bremssattel 2, der eine Bremsscheibe 3 umgreift. An einer Seite der Bremsscheibe 3 ist eine Zuspannvorrichtung 4 vorgesehen, welche einen Hebel 5 aufweist, der von einer nicht dargestellten Kolbenstange eines Druckluftzylinders bewegt wird, um einen Bremsvorgang einzuleiten. Hierfür weist die Zuspannvorrichtung 4 einen Excenter 6 auf, der über eine Druckstück-Traverse 7 mit zwei Stellspindeln 8 und 9 zusammenwirkt. An den Stellspindeln 8 und 9 ist ein Bremsbelag 10 abgestützt, wobei die beiden Stellspindeln 8, 9 über eine Kette oder einen Riemen gekoppelt sind. Die Traverse 7 ist in Richtung des Drehhebels 5 vorgespannt, wobei hierfür zwischen Bremssattel 2 und Traverse 7 eine entsprechende Feder angeordnet ist.

An den Außenseiten weist die Traverse 7 eine Gewindebohrung auf, in welche die mit Außengewinden versehenen Stellspindeln 8 und 9 eingeschraubt sind. In die Ausnehmung der Stellspindeln 8, 9 ragen Drehantriebe 11 hinein, die jeweils direkt von Elektromotoren 12 angetrieben sind und relativ zu den Spindeln 8 und 9 nicht verdrehbar sind.

Bei einer Beaufschlagung der Bremse mit Druckluft wird der Drehhebel 5 verschwenkt, was den Excenter 6 dreht und die Traverse 7 zur Bremsscheibe 3 hin verschiebt, sodass sich die Spindeln 8 und 9 in Richtung des Belages 10 bewegen. Dabei verschiebt sich auch der an einem Bremsträger axial verschieblich gelagerte Bremssattel S, welcher den anderen Bremsbelag 10 mitnimmt, sodass die Bremse zuspannt.

Bei dem dargestellten Ausführungsbeispiel sind zwei Spindeln 8 und 9 vorgesehen, wobei es natürlich möglich ist, nur eine Spindel 8 oder mehr als zwei Spindeln 8 und 9 vorzusehen.

Die Bremse kann dabei so ausgebildet sein, wie dies in der WO 02/014708 gezeigt ist.

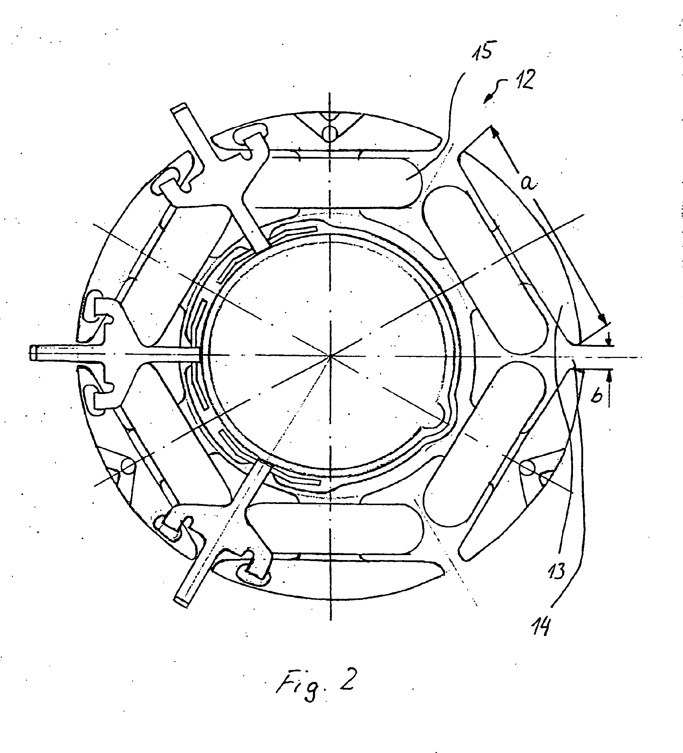

In Figur 2 ist der elektrische Antrieb gezeigt, bei dem ein Stator 15 vorgesehen ist. Dieser Antrieb 12 besitzt Polschuhe 13, zwischen denen Pollücken 14 vorgesehen sind. Die Breite der Polschuhe a ist so ausgestaltet, dass die Pollücken b vergleichsweise gering sind, sodass sich ein Verhältnis von Pol-Lücken-Breite zu Polschuh-Breite von 0,1 ergibt. Dadurch erreicht dieser Antriebsmotor eine hohe Laufruhe und kann für zahlreiche Anwendungen eingesetzt werden.

Zur Vermeidung des Rückstellens der Stellspindeln 8 und 9 bei Bremsvorgängen kann nach dem Zugankerprinzip der Rotor axial beweglich sein. Die Dauermagneten des Rotors sind zum Elektromagneten des Stators axial versetzt angeordnet. Wenn der Elektromagnet bestromt wird, wird der an einer Reibscheibe anliegende Rotor axial mit einer Kraft angezogen und von der Reibscheibe weg bewegt, sodass die axiale Bewegung genutzt werden kann, um im nicht bestromten Ruhezustand hohe Haltekräfte bereitzustellen, die im bestromten Zustand überwunden werden.

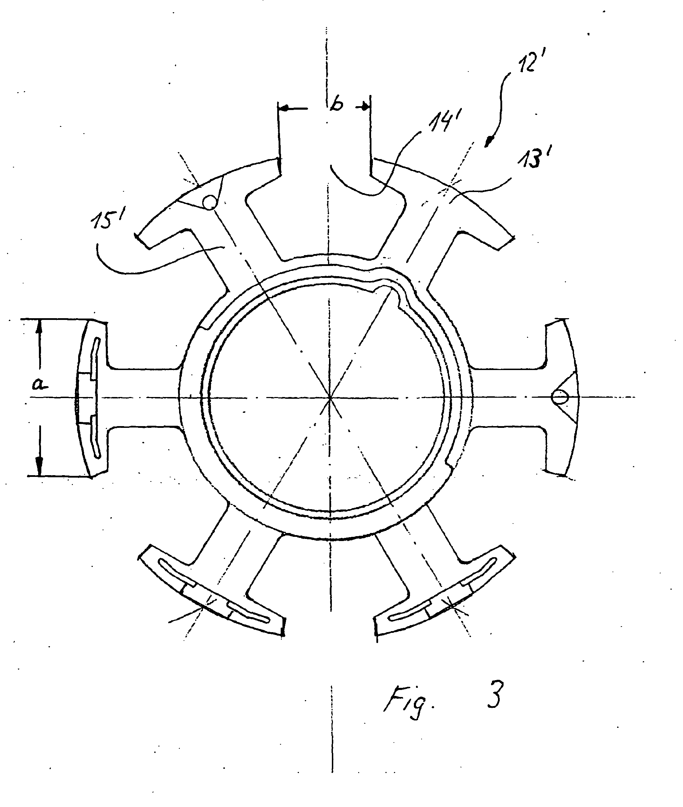

In Figur 3 ist eine alternative Ausgestaltung eines Rotors 15' gezeigt, bei dem Polschuhe 13' in verschiedenen Winkelstellungen angeordnet sind und zwischen sich Pollücken 14' ausbilden. Bei diesem Rotor 15' bilden sich Polrastmomente aus, da die Magnetpole des Dauermagneten bei stromlos stillstehendem Motor sich zu den Polen des Weicheisenkerns des Elektromagneten auszurichten versuchen, wobei die Vergrößerung der Pollücken solche Polrastmomente begünstigt. In dem dargestellten Ausführungsbeispiel wurde das Verhältnis von Pol-Lücken-Breite zu Polschuh-Breite auf 0,4 vergrößert. Durch die Großen Pol-Lücken 14' kann ein Polrastmoment geschaffen werden, das beispielsweise 20 mNm beträgt und bei einer entsprechenden Getriebeübersetzung von 196 zu 1 und 55 % Getriebewirkungsgrad an den Verstellspindeln des Nachstellmechanismus ein Haltemoment von mehr als 7 Nm erreicht werden. Diese Haltekräfte reichen aus, um ein Rückstellen der Spindeln 8 und 9 bei Bremsvorgängen zu vermeiden.

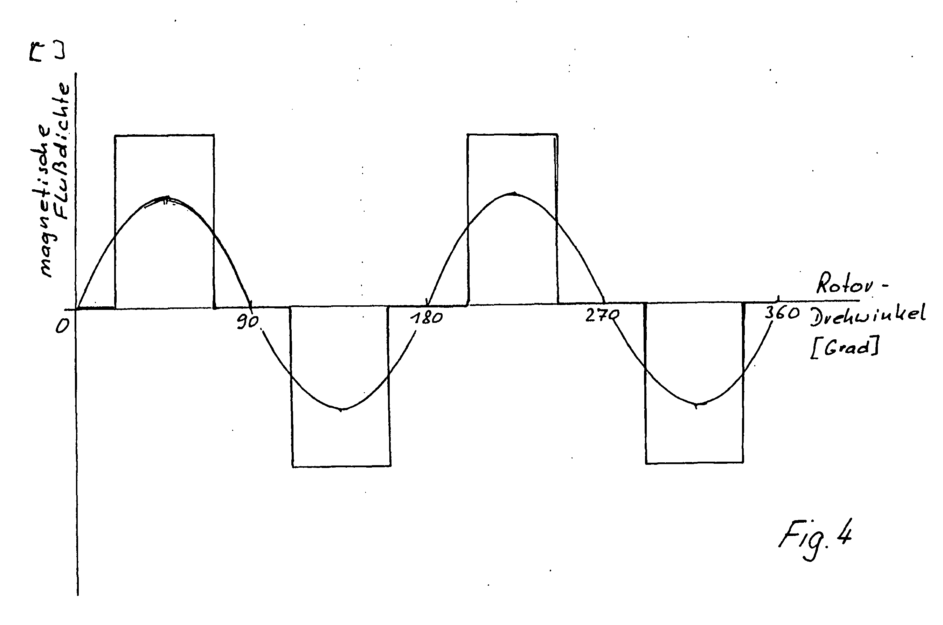

In Figur 4 ist en Diagramm betreffend die magnetische Flussdichte bei verschiedenen Drehwinkeln des Rotors gezeigt, wobei die verschiedenen Polrastmomente durch einen eckigen Graph dargestellt sind, da durch Polrastmomente harte Übergänge in den Magnetisierungs-Lücken vorhanden sind. Demgegenüber besitzt ein in Fig. 2 dargestellter elektrischer Antrieb 12 möglichst geringe Polrastmomente für einen ruhigen Lauf, wobei sich dann ein entsprechend sinusförmiger Verlauf und weiche Übergänge einstellen. Durch die rechteckig verlaufende Magnetisierungskurve werden Polrastmomente erzeugt, die dann auch ohne Bestromung entsprechende Haltekräfte besitzen.

Die Erfindung ist nicht auf die dargestellten Ausführungsbeispiele beschränkt. Auch andere elektrische Antriebe können eingesetzt werden, bei denen die Polrastmomente in geeigneter Weise abgewandelt sind, damit die zu erwartenden Kräfte aufgefangen werden können.

Statt der Haltekräfte durch die Magneten können die Rotoren auch axial beweglich angeordnet sein und nur bei Bestromen von einer Reibscheibe beabstandet werden, sodass im stromlosen Zustand die Rotoren für Haltekräfte sorgen, indem sie mittels einer Feder gegen die Reibscheibe gedrückt werden.

In der Fig. 1 ist eine pneumatisch betätigte Bremse gezeigt. Dabei wird der Hebel 5 durch entsprechende Betätigungselemente, wie eine Kolbenstange bewegt. Es ist natürlich auch möglich, andere Betätigungselemente vorzusehen.

## Patentansprüche

1. Nachstellvorrichtung für eine Scheibenbremse für Fahrzeuge, insbesondere für Nutzfahrzeuge, mit einem zum Bremsen bewegbares Betätigungselement (5), das auf wenigstens ein verschiebbares Element (7) einwirkt, welches auf wenigstens eine Stellspindel (8, 9) wirkt, um einen Bremsbelag (10) gegen eine Bremsscheibe (3) zu drücken, wobei ein elektrischer Antrieb (12) zum Nachstellen der Stellspindeln (8, 9) vorgesehen ist, **dadurch gekennzeichnet, dass** mittels des elektrischen Antriebes (12) die wenigstens eine Stellspindel (8, 9) gegen ein Rückstellen beim Bremsen fixiert ist, wobei die Fixierung über am Antrieb (12) wirkende Reib- oder Klemmkräfte erfolgt, die bei Bewegung des Antriebes überwindbar oder aufhebbar sind, wobei an dem elektrischen Antrieb (12) ein axial federnder Rotor vorgesehen ist und die Federkraft im stromlosen Zustand gegen eine Reibscheibe zur Fixierung der Stellspindel (8, 9) drückt, oder die Fixierung der Stellspindeln (8, 9) über Magnetkräfte erfolgt.

2. Nachstellvorrichtung nach Anspruch 1, **dadurch gekennzeichnet, dass** die Dauermagneten und die Elektromagneten des Antriebes (12) axial versetzt zueinander angeordnet sind, um die Fixierung der Stellspindel (8, 9) bei einer Bestromung zu lösen.

3. Nachstellvorrichtung nach Anspruch 1 oder 2, **dadurch gekennzeichnet, dass** zur Fixierung der Stellspindel (8, 9) Polrastmomente eingesetzt werden.

4. Nachstellvorrichtung nach Anspruch 3, **dadurch gekennzeichnet, dass** das Verhältnis von Pol- Lücken- Breite zur Polschuhbreite größer als 0,2, vorzugsweise größer als 0,3 ist.

5. Bremse, insbesondere pneumatisch betätigte Scheibenbremse, **dadurch gekennzeichnet, dass** eine Nachstellvorrichtung nach einem der vorhergehenden Ansprüche vorgesehen ist.

## Claims

1. Adjusting device for a disc brake for vehicles, in particular commercial vehicles, with an actuating element (5) movable for braking, which acts on at least one displaceable element (7) which in turn acts on at least one actuating screw (8, 9) to push a brake pad (10) against a brake disc (3), wherein an electric drive (12) is provided for the adjustment of the actuating screws (8, 9), **characterised in that** the at least one actuating screw (8, 9) is fixed against resetting in the braking process by means of the electric drive (12), the fixing effect being provided via frictional or clamping forces acting at the drive (12) and capable of being overcome or cancelled as the drive is moved, wherein an axially spring-loaded rotor is provided on the electric drive (12) and the spring force acts against a friction plate in the non-energised state to fix the actuating screw (8, 9), or wherein the actuating screws (8, 9) are fixed by means of magnetic forces.

2. Adjusting device according to claim 1, **characterised in that** the permanent magnets and the solenoids of the drive (12) are axially offset relative to one another in order to release the fixing of the actuating screw (8, 9) if a current is applied.

3. Adjusting device according to claim 1 or 2, **characterised in that** cogging torques are used to fix the actuating screw (8, 9).

4. Adjusting device according to claim 3, **characterised in that** the ratio between pole gap width and pole shoe width is more than 0.2, preferably more than 0.3.

5. Brake, in particular pneumatically actuated disc brake, **characterised in that** an adjusting device according to any of the preceding claims is provided.

## Revendications

1. Dispositif de rattrapage pour un frein à disque, en particulier pour des véhicules utilitaires, comprenant un élément de commande (5) mobile à serrer le frein, qui agit sur au moins un élément déplaçable (7), qui agit, à son tour, sur au moins une broche de réglage (89, 9) afin de presser une garniture de frein (10) contre un disque de frein (3), à un système électrique d'entraînement (12) étant disposé pour le rattrapage desdites broches de réglage (8, 9), **caractérisé en ce qu'**au moins une desdites broches de réglage (8, 9) est fixée moyennant ledit système électrique d'entraînement (12) afin de l'arrêter contre une remise au cas de serrage de frein, à cette fixation étant réalisée moyennant des efforts de friction ou de serrage actifs audit système d'entraînement (12), qui sont surmontable ou annulables au cours d'un mouvement du système d'entraînement, à un rotor axialement élastique étant disposé audit système électrique d'entraînement et à l'effort de ressort pressant contre un disque de friction en étant hors circuit afin de fixer ladite broche de réglage (8, 9), ou à la fixation desdites broches de réglage (8, 9) étant réalisée moyennant des forces magnétiques.

2. Dispositif de rattrapage selon la revendication 1, **caractérisé en ce que** les aimants permanents et les électroaimants dudit système d'entraînement (12) sont disposés à un déport axial l'un relativement à l'autre afin de desserrer la fixation de ladite broche de réglage (8, 9) au cas de mise en circuit.

3. Dispositif de rattrapage selon la revendication 1 ou 2, **caractérisé en ce que** des moments d'arrêt polaire sont utilisés afin de fixer ladite broche de réglage (8, 9).

4. Dispositif de rattrapage selon la revendication 3, **caractérisé en ce que** le rapport entre la largeur des lacunes entre les pôles, d'un côté, et la largeur de l'épanouissement polaire est plus grand que 0,1, de préférence plus grand que 0,3.

5. Frein, en particulier frein à disque à commande pneumatique, **caractérisé en ce qu'**un dispositif de rattrapage selon une quelconque des revendications précédentes est disposé.
